# EUROPÄISCHE PATENTSCHRIFT

(11) **EP 2 533 021 B1**
(45) Veröffentlichungstag und Bekanntmachung des Hinweises auf die Patenterteilung: **26.10.2016**
(21) Anmeldenummer: 11405269.9
(22) Anmeldetag: 10.06.2011
(51) Int. Cl.: G01D 5/36, G01D 5/245

(54) **Lineares Wegmesssystem und Verfahren zum Bestimmen einer Position eines Laufschlittens in Relation zu einer Laufschiene**
Linear distance measuring system and method for determining the absolute position of a slide in relation to a guide rail
Système de mesure de trajectoire linéaire et procédé de détermination d'une position d'une glissière en relation avec un rail de guidage

(43) Veröffentlichungstag der Anmeldung: 12.12.2012
(73) Patentinhaber: Schneeberger Holding AG, 4914 Roggwil (CH)
(72) Erfinder: Götz, Klaus-Dieter, 74372 Sersheim (DE)
(74) Vertreter: EGLI-EUROPEAN PATENT ATTORNEYS

(56) Entgegenhaltungen:
- WO-A1-89/11078
- WO-A2-2006/061830
- DE-A1- 3 942 547
- DE-A1- 10 303 795
- US-A1- 2005 189 938

## Beschreibung

Die Erfindung betrifft ein lineares Wegmesssystem nach Patentanspruch 1 und ein Verfahren zum Bestimmen einer Position eines Laufschlittens in Relation zu einer Laufschiene nach Patentanspruch 8.

Systeme zum Bestimmen einer Position eines Laufschlittens in Relation zu einer Laufschiene der vorstehend genannten Art werden beispielsweise in Kombination mit Führungssystemen, z.B. Linearführungen, verwendet, welche einen ersten Körper und einen relativ zum ersten Körper bewegbaren, an dem ersten Körper geführten zweiten Körper umfassen, und haben dabei die Aufgabe, eine Bestimmung der Position des zweiten Körpers relativ zum ersten Körper zu ermöglichen. Zu diesem Zweck können beispielsweise eine Messskala der jeweiligen Vorrichtung zur Bestimmung einer Position ortsfest relativ zum ersten Körper und eine jeweilige Abtastvorrichtung ortsfest relativ zum zweiten Körper angeordnet sein.

Es sind beispielsweise lineare Wegmesssysteme zur Bestimmung einer absoluten Position bekannt, welche die Messskala mit darauf aufgetragenen Messpunkten und eine relativ zur Messskala bewegbare Abtastvorrichtung zum Abtasten der jeweiligen Messpunkte umfassen. Diese Messpunkte sind beispielsweise durch eine oder mehrere erfassbare Markierungen zur Kennzeichnung einer Position gebildet. Die Markierungen können beispielsweise optisch oder magnetisch erfasst werden.

Im Falle der optischen Abtastung umfasst die Abtastvorrichtung einen Sensor zum Erfassen eines Bildes der Messpunkte und zum Bereitstellen von Signalen, welche eine Bestimmung der Position der Abtastvorrichtung relativ zur Messskala ermöglichen. Im Falle der magnetischen Abtastung umfasst die Abtastvorrichtung einen Magnetfeldsensor zum Erfassen eines Magnetfeldverlaufes von einzelnen Permanentmagneten, welche in diesem Fall die Messpunkte der Messskala ausbilden.

In Abhängigkeit von der jeweiligen Messskala (optisch/magnetisch) können derartige Systeme beispielsweise verwendet werden, um eine relative Veränderung einer Position der Abtastvorrichtung in Relation zu einer Ausgangsposition zu messen.

Um zu erreichen, dass derartige Systeme relative Veränderungen der Position der Abtastvorrichtung bezüglich der Messskala messen können, kann die jeweilige Messskala beispielsweise als inkrementale Skala ausgebildet sein und dementsprechend eine Folge von mehreren identischen, periodisch angeordneten Markierungen umfassen, welche in gleichen Abständen längs einer vorgegebenen Linie, bzw. Messskala angeordnet sind. Um beispielsweise eine optische Abtastung einer derartigen inkrementalen Messskala zu ermöglichen, kann die Abtastvorrichtung ein optisches Bild der jeweiligen Markierungen auf einen Sensor in Form eines fotoelektrischen Detektors projizieren. Um relative Veränderungen der Position der Abtastvorrichtung bezüglich der Messskala zu messen, wird die Abtastvorrichtung entlang der Spur der Markierungen bewegt. Die Bewegung der Abtastvorrichtung resultiert dabei in einer periodischen Veränderung eines Signals, welche beispielsweise Aufschluss gibt über die Anzahl der Markierungen, an welchen die Abtastvorrichtung innerhalb einer vorbestimmten Zeit vorbeibewegt wurde.

Zusammengefasst, kann die jeweilige Änderung der relativen Position der Abtastvorrichtung durch Abtasten der Messpunkte, bzw. Inkrementalmarkierungen einer inkrementalen Messskala bestimmt werden. Hierzu werden sogenannte Inkrementalgeber verwendet, welche vergleichsweise einfach aufgebaut sind und eine hohe Auflösung haben.

Abtastvorrichtungen von bekannten linearen Wegmesssystemen müssen dauerhaft mit externer elektrischer Energie versorgt werden, damit die gespeicherte Information über die jeweilige Position der Abtastvorrichtung nicht verloren geht. Eine auch nur kurzfristige Energieunterbrechung ohne jegliche Energiepufferung würde dazu führen, dass die Information über die jeweilige Position der Abtastvorrichtung verloren geht. Auch nach Fortsetzung der externen Energieversorgung würde die Abtastvorrichtung somit keine oder eine fehlerbehaftete Information bezüglich der Position ausgeben. Um von diesem Zustand aus wieder zu einem fehlerfreien Betrieb zu gelangen, müsste eine zeitaufwendige Neukalibrierung des Laufschlittens in Relation zur Laufschiene durchgeführt werden.

Es ist bekannt, dass Abtastvorrichtungen mit einer mobilen (internen) Energiequelle, beispielsweise eine Batterie oder ein Akkumulator, bestückt sind, über welche, im Falle einer Unterbrechung der externen Energieversorgung, ein Datenspeicher der Abtastvorrichtung zum Speichern der Information über die Position zumindest zeitweise mit Energie versorgt wird. Hierbei kann die Unterbrechung der externen Energieversorgung überbrückt werden und kann somit innerhalb der Zeitdauer von der Unterbrechung ein fehlerfreier Betrieb der externen Energieversorgung als auch darüber hinaus gewährleistet werden.

Die WO 89/11078 A1 offenbart eine digitale Messeinrichtung mit einem Lineal und einer Verschiebvorrichtung, welche entlang des Lineals verschoben werden kann. Zur Bestimmung der Position ist in der Verschiebvorrichtung eine elektrooptische Positionsbestimmungs-Vorrichtung angeordnet, welche optisch mit einem linearen Massstab aus parallel angeordneten Streifen gekoppelt ist. Die Positionsbestimmungs-Vorrichtung umfasst zwei als lichtempfindliche Dioden ausgestaltete Lichtsensoren, und eine oder zwei LEDs als Lichtquelle. Die Abtastrate wird in Abhängigkeit von der gemessenen Geschwindigkeit der Verschiebevorrichtung angepasst.

Die DE 39 42 547 A1 offenbart ein Verfahren und eine Vorrichtung zur Messung einer physikalischen Grösse mit einem faseroptischen Sensor, unter Ausnutzung des Faraday-Effekts. Für den Sensor kann bei kleinen Winkelgeschwindigkeiten die Abtastrate variabel eingestellt werden, um eine hohe Messgenauigkeit zu erzielen, insbesondere weil ein ABS/ASR Sensor blockierende Räder bzw. bei der Anfahrt durchrutschende Räder erkennen soll.

Die WO 2006/061830 A2 offenbart ein digitales Überwachungsgerät, um ein analoges Messinstrument zu überwachen. Die Abtastrate kann dabei angepasst werden, um Energie zu sparen, insbesondere wird die Abtastrate erhöht, wenn sich die Geschwindigkeit des Fahrzeuges erhöht. Die optimale Abtastrate wird basierend auf der aktuellen Geschwindigkeit und einer berechneten Beschleunigung eingestellt.

Die maximale Zeitdauer der Energieüberbrückung steht in Abhängigkeit von der Kapazität der mobilen Energiequelle. Mit steigender Kapazität der mobilen Energiequelle steigt (bei einem unveränderlichen Energieverbrauch) auch die maximale Zeitdauer zur Überbrückung der Unterbrechung der externen Energieversorgung an. Nachteilig hieran ist, dass mit steigender Kapazität der mobilen Energiequelle auch deren Kosten zunehmen. Zudem geht ein Gebrauch von mobilen Energiequellen mit erhöhter Kapazität auch mit einer erhöhten Masse und/oder einem erhöhten Platzbedarf einher. Insbesondere die beiden letztgenannten Faktoren wirken sich insgesamt nachteilig auf den Betrieb des linearen Wegmesssystems aus. So wird beispielsweise aufgrund von der erhöhten Masse der mobilen Energiequelle insgesamt die Beschleunigung des Laufschlittens herabgesetzt.

Es ist Aufgabe der vorliegenden Erfindung ein lineares Wegmesssystem und ein Verfahren zum Bestimmen einer Position eines Laufschlittens in Relation zu einer Laufschiene zu schaffen, bei welchen die Zeitdauer zur Energieüberbrückung an die Abtastvorrichtung bei einem gleichbleibend zuverlässigen Betrieb des Wegmesssystems maximiert wird.

Diese Aufgabe wird durch die Merkmale des Patentanspruchs 1 gelöst.

Ein lineares Wegmesssystem zum Bestimmen einer Position eines Laufschlittens in Relation zu einer Laufschiene enthält eine entlang der Laufschiene aufgetragene Inkrementalskala und eine am Laufschlitten angebrachte Abtastvorrichtung. Die Abtastvorrichtung ist dazu ausgelegt, eine Mehrzahl von Inkrementalmarkierungen entlang der Inkrementalskala abzutasten, wobei die Inkrementalmarkierungen als ein im Wesentlichen analoger Signalverlauf abtastbar sind. Erfindungsgemäss ist die Abtastvorrichtung dazu ausgelegt, die Inkrementalmarkierungen adaptiv mit einer veränderbaren Abtastfrequenz abzutasten, welche in Relation zu einer aktuell erfassten Frequenz des analogen Signalverlaufs veränderbar ist, wobei die veränderbare Abtastfrequenz zumindest das Zweifache der aktuell erfassten Frequenz des analogen Signalverlaufs beträgt. Erfindungsgemäss ist die Abtastvorrichtung dazu ausgelegt, die aktuelle Frequenz des analogen Signalverlaufs durch Abtastung mit einer zweiten Abtastfrequenz zu bestimmen, welche grösser als die veränderbare Abtastfrequenz ist.

Das lineare Wegmesssystem ist dazu in der Lage, eine Abtastung bei zeitlich variabler Abtastfrequenz durchzuführen. Hierdurch stellt sich der Vorteil ein, dass die Abtastfrequenz so weit wie möglich reduziert werden kann, wobei jedoch das Abtasttheorem (Nyquist-Rate) weiterhin eingehalten wird. Diese Verringerung der Abtastfrequenz geht einher mit einer Verringerung des Energieverbrauchs der Abtastvorrichtung. Hieraus entsteht der wesentliche Vorteil, dass die Abtastvorrichtung im Falle einer Unterbrechung der Zufuhr externer Energie nunmehr mittels am Laufschlitten oder an der Abtastvorrichtung mitgeführter Batterien oder Akkumulatoren überbrückend mit Energie versorgt werden kann, wobei die Zeitdauer der Energieüberbrückung im Vergleich zu herkömmlich bekannten linearen Wegmesssystemen sehr viel länger ist. Somit ist gewährleistet, dass die Abtastvorrichtung auch während der Zeitdauer einer langandauernden Energieunterbrechung und darüber hinaus, d.h. nachdem die Energieunterbrechung beendet ist und die Abtastvorrichtung wieder mit externer Energie versorgt wird, ununterbrochen im Betrieb ist.

Dieser Vorteil wird hierbei nicht durch Kompromisse hinsichtlich der Zuverlässigkeit und Präzision der Positionsbestimmung erkauft. So kann auch dann weiterhin eine hochgenaue Positionsbestimmung erzielt werden, wenn der Laufschlitten, z.B. durch Stösse auf das lineare Wegmesssystem und/oder auf die Abtastvorrichtung, plötzlich eine in Relation zu vorherigen Geschwindigkeiten sehr hohe Geschwindigkeit aufnimmt. In diesem Fall wird der rasante Anstieg der aktuell erfassten Frequenz des analogen Signalverlaufs erfasst und unmittelbar in Ansprechen hierauf die Abtastfrequenz in Relation zu diesem Anstieg erhöht. Somit ist die Zuverlässigkeit der Positionsbestimmung gegeben.

Die Abtastvorrichtung ist erfindungsgemäss dazu ausgelegt, die aktuelle Frequenz des analogen Signalverlaufs durch Abtastung mit einer zweiten Abtastfrequenz zu bestimmen, welche grösser als die veränderbare Abtastfrequenz ist. Durch dieses Verfahren kann eine Erhöhung der Geschwindigkeit des Laufschlittens unverzüglich und zuverlässig erfasst werden und kann daraus folgend die veränderbare Abtastfrequenz entsprechend erhöht werden. Im Umkehrschluss kann eine Verringerung der Geschwindigkeit des Laufschlittens erfasst werden und kann daraus folgend die veränderbare Abtastfrequenz entsprechend verringert werden. Die Relation zwischen der veränderbaren Abtastfrequenz und der zweiten Abtastfrequenz kann beispielsweise 1 zu 10 betragen.

Vorzugsweise ist die Abtastvorrichtung dazu ausgelegt, die zweite Abtastung jeweils nach Beendigung der Abtastung mit der veränderbaren Abtastfrequenz durchzuführen. Hierdurch können Geschwindigkeitsänderungen des Laufschlittens unverzüglich erfasst werden, wodurch es ermöglicht wird, die veränderbare Abtastfrequenz unmittelbar an die geänderte Geschwindigkeit anzupassen. Durch diese kurze Reaktionszeit kann die Position des Laufschlittens auch nach plötzlichen Geschwindigkeitsänderungen, beispielsweise hervorgerufen durch Stösse auf das lineare Wegmesssystem, zuverlässig erfasst werden.

Vorzugsweise ist die Abtastfrequenz linear oder schrittweise veränderbar. Hierdurch ist es gewährleistet, dass die veränderbare Abtastfrequenz bei jenen Betrieben des linearen Wegmesssystems gering gehalten wird, bei welchen der Laufschlitten mit einer relativ geringen Geschwindigkeit bewegt wird. Da der Energieverbrauch zur Abtastung mit der Abtastfrequenz einhergeht, ist der Energieverbrauch in jenen Betrieben auch sehr viel geringer als bei linearen Wegmesssystemen aus dem Stand der Technik. Sobald jedoch erfasst wird, dass die Frequenz des analogen Signalverlaufs ansteigt, z.B. hervorgerufen durch eine Erhöhung der Geschwindigkeit (Beschleunigung) des Laufschlittens, wird die Abtastfrequenz linear oder schrittweise erhöht. Zwar erhöht sich hierdurch der Energieverbrauch der Abtastvorrichtung, allerdings ist weiterhin die notwendige Zuverlässigkeit gegeben, dass alle Inkrementalmarkierungen zuverlässig erfasst werden. Verringert sich von diesem Zustand aus die Geschwindigkeit des Laufschlittens (Verzögerung), so wird auch die Abtastfrequenz wieder verringert. Insgesamt wird somit der Energieverbrauch der Abtastvorrichtung reduziert. Es ist zu erwähnen, dass die lineare oder schrittweise Veränderung der veränderbaren Abtastfrequenz in Ansprechen auf die jeweils aktuell erfasste Frequenz des analogen Signalverlaufs stets derart bemessen ist, dass die jeweilige Abtastfrequenz zumindest das Zweifache der aktuell erfassten Frequenz des analogen Signalverlaufs entspricht. Somit wird das Abtasttheorem (Nyquist-Rate) eingehalten, welches Garant für eine zuverlässige Positionsbestimmung ist.

Vorzugsweise enthält die Abtastvorrichtung einen Komparator, welcher einen Frequenzwert entsprechend der Abtastfrequenz mit einem Frequenzwert entsprechend dem Zweifachen der aktuell erfassten Frequenz des analogen Signalverlaufs vergleicht, wobei die Abtastvorrichtung unter Hinzufügung eines vorbestimmten Sicherheitsabstandswertes dazu ausgelegt ist, im Falle einer durch den Komparator erfassten Erhöhung der aktuellen Frequenz die veränderbare Abtastfrequenz zu erhöhen, und im Falle einer durch den Komparator erfassten Verringerung der aktuellen Frequenz die veränderbare Abtastfrequenz zu verringern.

Hierdurch ist die Möglichkeit gegeben, dass die Abtastvorrichtung des linearen Wegmesssystems stets mit einer Frequenz abtastet, welche zumindest doppelt so hoch ist wie die Frequenz des analogen Signalverlaufs. Gleichzeitig, unter Einhaltung dieses Kriteriums, wird die Abtastfrequenz adaptiv so gering wie möglich in Relation auf die Frequenz des analogen Signalverlaufs und somit auf die Geschwindigkeit des Laufschlittens eingestellt.

Im Vergleich zu linearen Wegmesssystemen aus dem Stand der Technik, bei welchen die Abtastfrequenz statisch derart (hoch) eingestellt ist, dass stets die maximale Geschwindigkeit des Laufschlittens abgedeckt wird, bieten sich hierdurch bislang unbekannte Möglichkeiten zur Energieeinsparung an. Somit ist es erst ermöglicht, die Abtastvorrichtung im Falle einer Unterbrechung der externen Energieversorgung mit einer Energie von einer mobilen Energiequelle, beispielsweise zumindest eine Batterie oder ein Akkumulator, über eine im Vergleich zum Stand der Technik sehr viel längere Zeitdauer zuverlässig mit Energie zu versorgen. Eine solche mobile Energiequelle kann direkt an der Abtastvorrichtung mitgeführt werden.

Vorzugsweise entspricht der Sicherheitsabstandswert gleich einem Wert in einem Bereich zwischen 5 und 25%. Hierdurch bietet sich die Möglichkeit an, dass die Abtastvorrichtung adaptiv an den Qualitätsansprüchen hinsichtlich der Genauigkeit der Positionsbestimmung, welchen das lineare Wegmesssystem genügen muss, einstellbar ist. Allgemein gilt, dass die Genauigkeit der Positionsbestimmung von der Abtastvorrichtung in Relation zur Laufschiene mit zunehmend erhöhtem Sicherheitsabstandswert zunimmt. Zugleich nimmt auch der Energieverbrauch der Abtastvorrichtung zu. Diese Abstimmung zwischen der Genauigkeit der Positionsbestimmung und dem Energieverbrauch kann adaptiv auf den jeweiligen Einsatzbereich des linearen Wegmesssystems eingestellt werden.

Vorzugsweise sind die Inkrementalmarkierungen als einzelne Permanentmagnete ausgebildet, deren jeweiliger magnetischer Feldstärkenverlauf durch die Abtastvorrichtung abtastbar ist. Hierdurch ist eine besonders genaue Abtastung möglich, da die Magnetfeldabtastung im Vergleich zu weiteren Abtastverfahren besonders störunempfindlich ist. Zudem kann eine Abtastung mit besonders feiner Rasterung erfolgen, da die Permanentmagnete im Vergleich zu weiteren Ausgestaltungen von Inkrementalmarkierungen eine besonders geringe Breite haben können.

Vorzugsweise sind die Inkrementalmarkierungen als optische Markierungen ausgebildet, welche durch die Abtastvorrichtung optisch abtastbar sind. Bei diesem Verfahren werden optisch detektierbare Markierungen, welche auf der Inkrementalskala aufgebracht sind, durch optische Leseköpfe der Abtastvorrichtung abgetastet. Diese Art und Weise der Abtastung ist im Vergleich zu weiteren Abtastverfahren besonders kostengünstig realisierbar.

Die zuvor genannte Aufgabe wird zudem durch ein Verfahren zum Bestimmen einer Position eines Laufschlittens in Relation zu einer Laufschiene gelöst. Bei diesem Verfahren tastet eine an dem Laufschlitten angebrachte Abtastvorrichtung eine Mehrzahl von Inkrementalmarkierungen ab. Diese Inkrementalmarkierungen sind entlang einer Inkrementalskala aufgetragen, wobei diese Inkrementalskala entlang der Laufschiene aufgetragen ist. Hierbei werden die Inkrementalmarkierungen als ein im Wesentlichen analoger Signalverlauf abgetastet. Erfindungsgemäss werden die Inkrementalmarkierungen mit einer veränderbaren Abtastfrequenz adaptiv abgetastet, welche in Relation zu einer aktuell erfassten Frequenz des analogen Signalverlaufs verändert wird, wobei die veränderbare Abtastfrequenz derart eingestellt wird, dass sie zumindest das Zweifache der aktuell erfassten Frequenz des analogen Signalverlaufs beträgt.

Ein Vorteil der Abtastung mit variabler Abtastfrequenz besteht darin, dass die Abtastfrequenz so weit wie möglich reduziert werden kann. Hierbei wird die Abtastfrequenz unter Einhaltung des Abtasttheorems (Nyquist-Rate) reduziert. Die Frequenz der Abtastrate ist somit stets zumindest doppelt so hoch wie die Frequenz des abzutastenden Signalverlaufs. Durch die Verringerung der Abtastfrequenz wird auch der Energieverbrauch der Abtastvorrichtung reduziert. Somit kann die Abtastvorrichtung im Falle einer Unterbrechung der externen Energieversorgung nunmehr mittels am Laufschlitten oder an der Abtastvorrichtung mitgeführter Batterien oder Akkumulatoren überbrückend mit Energie versorgt werden.

Vorzugsweise wird die aktuelle Frequenz des analogen Signalverlaufs durch Abtastung mit einer zweiten Abtastfrequenz bestimmt, welche grösser als die veränderbare Abtastfrequenz ist. Hierdurch wird eine Erhöhung oder Verringerung der Geschwindigkeit des Laufschlittens zuverlässig erfasst und kann daraus folgend die veränderbare Abtastfrequenz entsprechend erhöht oder verringert werden. Die Abtast-Genauigkeit des linearen Wegmesssystems ist somit unverändert hoch, sodass auch dann weiterhin eine hochgenaue Positionsbestimmung erzielt werden kann, wenn der Laufschlitten plötzlich eine sehr hohe Geschwindigkeit (Beschleunigung) aufnimmt. Eine solche plötzliche Beschleunigung kann beispielsweise durch Stösse auf das lineare Wegmesssystem und/oder auf die Abtastvorrichtung selber auftreten. In diesem Fall wird ein rasanter Anstieg der aktuell erfassten Frequenz des analogen Signalverlaufs durch die Abtastung mit der zweiten Abtastfrequenz erfasst. In Ansprechen auf diese Erfassung wird die Abtastfrequenz unmittelbar in Relation zu diesem Anstieg erhöht.

Vorzugsweise wird die zweite Abtastung jeweils nach Beendigung der Abtastung mit der veränderbaren Abtastfrequenz durchgeführt. Es besteht ein Vorteil darin, dass Geschwindigkeitsänderungen des Laufschlittens somit unverzüglich erfasst werden können, wodurch es möglich wird, die veränderbare Abtastfrequenz unmittelbar in Relation auf die geänderte Geschwindigkeit des Laufschlittens anzupassen. Durch diese kurze Reaktionszeit kann die Position des Laufschlittens auch bei plötzlichen Beschleunigungen zuverlässig erfasst werden.

Vorzugsweise wird die veränderbare Abtastfrequenz linear oder schrittweise verändert. Bei einer Erfassung von einer Veränderung in der Frequenz des analogen Signalverlaufs, beispielsweise hervorgerufen durch eine plötzliche Beschleunigung des Laufschlittens, wird die Abtastfrequenz linear oder schrittweise erhöht. Somit können weiterhin alle Inkrementalmarkierungen zuverlässig unter Einhaltung des Abtasttheorems erfasst werden. Verzögert sich die Geschwindigkeit des Laufschlittens von diesem Zustand aus, wird unmittelbar auch die Abtastfrequenz linear oder schrittweise verringert. Hierdurch wird insgesamt der Energieverbrauch der Abtastvorrichtung reduziert. Dies beweist sich als besonders vorteilhaft im Falle der Unterbrechung der externen Energieversorgung und einer in diesem Zeitbereich erfolgenden Energieüberbrückung durch eine am Laufschlitten bzw. an der Abtastvorrichtung mitgeführte Energiequelle, beispielsweise eine Batterie oder ein Akkumulator. Die maximale Zeitdauer dieser Energieüberbrückung ist hierbei im Vergleich zu bekannten Wegmesssystemen verlängert.

Vorzugsweise wird ein Komparator dazu verwendet, unter Hinzufügung eines vorbestimmten Sicherheitsabstandswertes, einen Frequenzwert entsprechend der Abtastfrequenz mit einem Frequenzwert entsprechend dem Zweifachen der aktuell erfassten Frequenz des analogen Signalverlaufs zu vergleichen. Das Verfahren enthält ferner die Schritte eines Erhöhens der veränderbaren Abtastfrequenz, wenn erfasst wird, dass die aktuelle Frequenz erhöht ist, und eines Verringerns der veränderbaren Abtastfrequenz, wenn erfasst wird, dass die aktuelle Frequenz verringert ist.

Durch den Vergleichsschritt des Komparators ist die Abtastvorrichtung des linearen Wegmesssystems dazu in der Lage, den analogen Signalverlauf in Relation zur Geschwindigkeit stets mit einer Frequenz abzutasten, welche zumindest doppelt so hoch ist wie die Frequenz des analogen Signalverlaufs. Unter fortdauernder Einhaltung dieses Kriteriums wird die Abtastfrequenz adaptiv so gering wie möglich auf die Frequenz des analogen Signalverlaufs und somit auf die Geschwindigkeit des Laufschlittens eingestellt.

Vorzugsweise wird der Sicherheitsabstandswert in einem Bereich zwischen 5 und 25% eingestellt. Durch eine Einstellung des Sicherheitsabstandswertes auf einen Wert innerhalb dieses Bereiches kann adaptiv eine Abstimmung zwischen einer Genauigkeits-Anforderung der Positionsbestimmung und einer Energieverbrauchs-Anforderung auf den jeweiligen Einsatzbereich des linearen Wegmesssystems vorgenommen werden. Ein zunehmend erhöhter Sicherheitsabstandswert erhöht auch die Genauigkeit und Zuverlässigkeit der Positionsbestimmung von der Abtastvorrichtung. Jedoch nimmt hierbei auch der Energieverbrauch der Abtastvorrichtung zu, wodurch im Umkehrschluss die maximale Zeitdauer der Energieüberbrückung durch die am Laufwagen mitgeführte Energiequelle verringert wird.

Vorzugsweise werden die Inkrementalmarkierungen als einzelne Permanentmagnete ausgebildet, deren jeweiliger magnetischer Feldstärkenverlauf durch die Abtastvorrichtung abgetastet wird. Die Verwendung von nebeneinander angeordneten Permanentmagneten als Inkrementalmarkierungen gewährleistet eine besonders genaue Abtastung, da deren Magnetfeldabtastung im Vergleich zu weiteren Abtastverfahren besonders störunempfindlich ist. Zudem erfolgt die Abtastung mit besonders feiner Rasterung, da die Permanentmagnete im Vergleich zu weiteren Ausgestaltungen von Inkrementalmarkierungen eine besonders geringe Breite haben.

Vorzugsweise werden die Inkrementalmarkierungen als optische Markierungen ausgebildet, welche durch die Abtastvorrichtung optisch abgetastet werden. Bei diesem Verfahren werden optisch detektierbare Markierungen, welche auf der Inkrementalskala aufgebracht sind, durch optische Leseköpfe der Abtastvorrichtung abgetastet. Diese Art und Weise der Abtastung ist im Vergleich zu weiteren Abtastverfahren besonders kostengünstig realisierbar.

Im Folgenden wird die Erfindung anhand eines Ausführungsbeispiels näher erläutert. Hierbei zeigen:
- Figur 1: eine Detailansicht eines linearen Wegmesssystems; und
- Figur 2: ein Diagramm zur Erläuterung der Zeitintervalle von Abtastzeitpunkten.

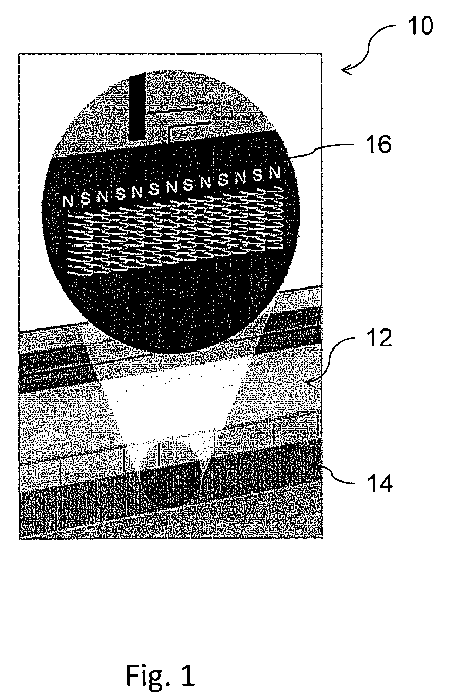

In Fig. 1 ist eine Detailansicht eines linearen Wegmesssystems 10 gezeigt, welche einen Flankenabschnitt einer Laufschiene 12 des linearen Wegmesssystems 10 vergrössert anzeigt. Die Laufschiene 12 dient zum Führen eines Laufschlittens, an welchem eine Abtastvorrichtung stationär angebracht ist (beide nicht gezeigt). An der Flanke der Laufschiene 12 ist eine Inkrementalskala 14 aufgetragen.

Die Inkrementalskala 14 ist aus mehreren nebeneinander angeordneten Permanentmagneten 16 ausgebildet, welche abwechselnd in N-S, N-S, usw. Richtung ausgerichtet sind. Zur Veranschaulichung sind die hieraus resultierenden Magnetfeldlinienverläufe schematisch dargestellt.

Um relative Veränderungen der Position der Abtastvorrichtung bezüglich der Inkrementalskala 14 (und somit der Laufschiene 12) messen zu können, wird der Laufschlitten mit der daran angebrachten Abtastvorrichtung entlang der Spur der Permanentmagnete 16 bewegt. Die Bewegung der Abtastvorrichtung resultiert dabei in einer Erfassung einer periodischen Veränderung eines Messsignals in Ansprechen auf den Magnetfeldverlauf der einzelnen Permanentmagnete 16. Diese periodische Veränderung des Messsignals gibt Aufschluss über die Anzahl der Permanentmagnete 16, an welchen die Abtastvorrichtung innerhalb einer bekannten Zeitperiode vorbeibewegt wurde. Dies ermöglicht wiederum einen Rückschluss über die zurückgelegte Distanz des Laufschlittens in Relation zur Laufschiene 12 und zur Zeit.

Die Abtastung der einzelnen Permanentmagnete 16 muss hierbei besonders zuverlässig erfolgen, da eine Fehlinterpretation zu einer fehlerhaften Aussage bezüglich der Position des Laufschlittens in Bezug auf die Laufschiene 12 führen würde.

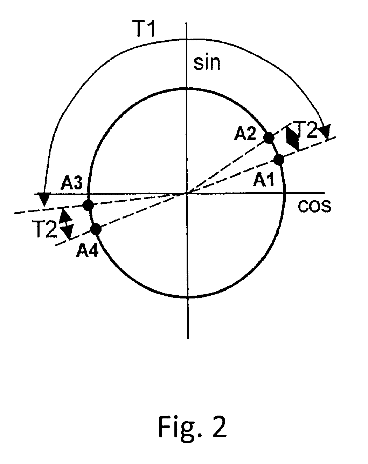

Fig. 2 zeigt ein Diagramm zur Erläuterung der Einstellung von Abtast-Zeitpunkten. Erfindungsgemäss werden die Inkrementalmarkierungen adaptiv mit einer veränderbaren Abtastfrequenz abgetastet, welche in Relation zu einer aktuell erfassten Frequenz des analogen Signalverlaufs veränderbar ist. Hierbei muss die veränderbare Abtastfrequenz zumindest das Zweifache der aktuell erfassten Frequenz des analogen Signalverlaufs betragen. Bei dem in der Figur gezeigten Beispiel werden die zurückgelegte Strecke und die Geschwindigkeit des Laufschlittens in Relation zur Laufschiene durch zeitgleiches Abtasten von sin und cos Signalen der Permanentmagnete gemessen. Gemäss dem Abtasttheorem muss dabei die Abtastfrequenz (1/T1) mindestens doppelt so hoch sein wie die gemessene Frequenz des analogen Signalverlaufs.

Bezogen auf das in Fig. 2 gezeigte Diagramm bedeutet dies, dass der durch T1 repräsentierte Winkelbetrag einen Wert kleiner 180° haben muss. Sollte dieser Winkelbetrag überschritten werden, so wird in der Abtastvorrichtung die Ergänzung auf 360° als eine Bewegung des Laufschlittens in die entgegengesetzte Richtung interpretiert.

Herkömmliche lineare Wegmesssysteme arbeiten mit Abtastvorrichtungen, welche über elektrische Leitungen mit externer Energie versorgt werden. Für den Fall einer Unterbrechung der Zufuhr der externen Energie, beispielsweise hervorgerufen durch einen Ausfall der externen Energieversorgung, durch eine Leitungsunterbrechung der Zuführung oder ein Ausschalten der externen Energieversorgung, ist eine mobile Energiequelle vorgesehen, beispielsweise eine Batterie oder ein Akkumulator, welche am Laufschlitten oder direkt an der Abtastvorrichtung angebracht ist. Der Ausfall der Energieversorgung über die externe Energieversorgung wird dann unmittelbar durch die Energieversorgung über die mobile Energiequelle überbrückt. Somit wird vermieden, dass eine gespeicherte Information über die jeweils aktuell erfasste Position des Laufschlittens verloren geht. Durch die zuvor beschriebene Energieeinsparung wird die maximale Zeitdauer massgeblich erhöht, innerhalb welcher die mobile Energiequelle dazu ausgelegt ist die Abtastvorrichtung mit ausreichend Energie zu versorgen.

Um die erforderliche Energieeinsparung zu erzielen wird daher vorgeschlagen, die Abtastfrequenz 1/T1 der Abtastvorrichtung soweit wie möglich zu reduzieren. Hierzu wird das Abtastintervall T1 in Relation zur Bewegungsgeschwindigkeit verändert. Nähert sich der innerhalb des Zeitintervalls T1 zurückgelegte Winkelbetrag einem Wert von 180°, wird das Zeitintervall T1 entsprechend reduziert, bzw. wird die Abtastfrequenz 1/T1 erhöht. Es kann ein Sicherheitsabstandswert implementiert werden, welcher um einen einstellbaren Wert vor dem Erreichen des Winkelbetrages von 180° greift. Somit wird die Abtastfrequenz schon früher erhöht, um hierbei dem Abtasttheorem zuverlässig zu genügen. Diese Erhöhung der Abtastfrequenz kann schrittweise (iterativ) oder linear erfolgen.

Bei hohen Beschleunigungen kann der Fall auftreten, dass der Winkelbetrag im aktuellen Abtastzyklus den Wert von 180° überschreitet, obwohl dieser Grenzwert im vorherigen Zyklus noch nicht überschritten worden ist. Um auch diesen Fall zu erkennen, wird nach jeder Abtastung A1 und A3 eine Abtastung A2 und A4 mit einem wesentlich kürzeren Zeitintervall T2 durchgeführt, wie in dem in Fig. 2 angezeigten Beispiel verdeutlicht. Durch diese Abtastung bei höherer Abtastfrequenz 1/T2 können entsprechend höhere Bewegungsgeschwindigkeiten (Frequenzen von sin und cos Signalen) erfasst werden.

Bei dem in der Fig. 2 dargestellten Beispiel entspricht das Zeitintervall T1 dem zehnfachen Intervall des Zeitintervalls T2 (T2 = T1/10). Entsprechend dieser Wahl des Verhältnisses zwischen T2 und T1 darf die innerhalb des Zeitintervalls T2 (Zeitintervall zwischen den Abtastungen A3 und A4) zurückgelegte Strecke nur einen Wert entsprechend 1/10 des Grenzwertes einnehmen. Sollte dieser Wert höher sein, so ist die innerhalb des Zeitintervalls T1 gemessene Strecke nicht korrekt bestimmt, da das Abtasttheorem verletzt wurde. Vorteilhafterweise kann dieser Fehler jedoch erfasst werden und kann diese nicht korrekt gemessene Strecke verworfen werden. Auf diese Art und Weise können Messfehler erkannt und vermieden werden, ohne dass eine kontinuierliche Abtastung mit der hohen Abtastfrequenz 1/T2 notwendig ist. Hierdurch ist eine ganz wesentliche Energieeinsparung gegeben, durch welche, im Falle einer Unterbrechung der externen Energieversorgung, ein im Vergleich zu bekannten Wegmesssystemen verlängerter Gebrauch von Batterien oder Akkumulatoren in der Abtastvorrichtung ermöglicht ist.

## Patentansprüche

1. Lineares Wegmesssystem (10) zum Bestimmen einer Position eines Laufschlittens in Relation zu einer Laufschiene (12), mit einer entlang der Laufschiene (12) aufgetragenen Inkrementalskala (14) und einer am Laufschlitten angebrachten Abtastvorrichtung, wobei die Abtastvorrichtung dazu ausgelegt ist, eine Mehrzahl von Inkrementalmarkierungen entlang der Inkrementalskala (14) abzutasten, wobei die Inkrementalmarkierungen als ein im Wesentlichen analoger Signalverlauf abtastbar sind, wobei die Abtastvorrichtung dazu ausgelegt ist, die Inkrementalmarkierungen mit einer veränderbaren Abtastfrequenz abzutasten, welche adaptiv in Relation zu einer aktuell erfassten Frequenz des analogen Signalverlaufs veränderbar ist, wobei die veränderbare Abtastfrequenz zumindest das Zweifache der aktuell erfassten Frequenz des analogen Signalverlaufs beträgt, **dadurch gekennzeichnet, dass** die Abtastvorrichtung dazu ausgelegt ist, die aktuelle Frequenz des analogen Signalverlaufs durch Abtastung mit einer zweiten Abtastfrequenz zu bestimmen, welche grösser als die veränderbare Abtastfrequenz ist.

2. Lineares Wegmesssystem (10) nach Anspruch 1, bei welchem die Abtastvorrichtung dazu ausgelegt ist, die zweite Abtastung jeweils nach Beendigung der Abtastung mit der veränderbaren Abtastfrequenz durchzuführen.

3. Lineares Wegmesssystem (10) nach einem der vorhergehenden Ansprüche, bei welchem die veränderbare Abtastfrequenz linear oder schrittweise veränderbar ist.

4. Lineares Wegmesssystem (10) nach einem der vorhergehenden Ansprüche, bei welchem die Abtastvorrichtung einen Komparator enthält, welcher einen Frequenzwert entsprechend der Abtastfrequenz mit einem Frequenzwert entsprechend dem Zweifachen der aktuell erfassten Frequenz des analogen Signalverlaufs vergleicht, und die Abtastvorrichtung unter Hinzufügung eines vorbestimmten Sicherheitsabstandswertes dazu ausgelegt ist:
im Falle einer durch den Komparator erfassten Erhöhung der aktuellen Frequenz die veränderbare Abtastfrequenz zu erhöhen, und
im Falle einer durch den Komparator erfassten Verringerung der aktuellen Frequenz die veränderbare Abtastfrequenz zu verringern.

5. Lineares Wegmesssystem (10) nach Anspruch 4, bei welchem der Sicherheitsabstandswert gleich einem Wert in einem Bereich zwischen 5 und 25% entspricht.

6. Lineares Wegmesssystem (10) nach einem der vorhergehenden Ansprüche, bei welchem die Inkrementalmarkierungen als einzelne Permanentmagnete (16) ausgebildet sind, deren jeweiliger magnetischer Feldstärkenverlauf durch die Abtastvorrichtung abtastbar ist.

7. Lineares Wegmesssystem nach einem der Ansprüche 1 bis 5, bei welchem die Inkrementalmarkierungen als optische Markierungen ausgebildet sind, welche durch die Abtastvorrichtung optisch abtastbar sind.

8. Verfahren zum Bestimmen einer Position eines Laufschlittens in Relation zu einer Laufschiene (12), mit einer entlang der Laufschiene (12) aufgetragenen Inkrementalskala (14) und einer am Laufschlitten angebrachten Abtastvorrichtung, wobei die Abtastvorrichtung eine Mehrzahl von Inkrementalmarkierungen entlang der Inkrementalskala (14) abtastet, wobei die Inkrementalmarkierungen als ein im Wesentlichen analoger Signalverlauf abgetastet werden, wobei die Inkrementalmarkierungen mit einer veränderbaren Abtastfrequenz abgetastet werden, welche in Relation zu einer aktuell erfassten Frequenz des analogen Signalverlaufs adaptiv veränderbar ist, wobei die veränderbare Abtastfrequenz derart eingestellt wird, dass sie zumindest das Zweifache der aktuell erfassten Frequenz des analogen Signalverlaufs beträgt, **dadurch gekennzeichnet, dass**
die aktuelle Frequenz des analogen Signalverlaufs durch Abtastung mit einer zweiten Abtastfrequenz bestimmt wird, welche grösser als die veränderbare Abtastfrequenz ist.

9. Verfahren nach Anspruch 8, bei welchem die zweite Abtastung jeweils nach Beendigung der Abtastung mit der veränderbaren Abtastfrequenz durchgeführt wird.

10. Verfahren nach einem der Ansprüche 8 bis 9, bei welchem die veränderbare Abtastfrequenz linear oder schrittweise verändert wird.

11. Verfahren nach einem der Ansprüche 8 bis 10, bei welchem die Abtastvorrichtung einen Komparator enthält, welcher, unter Hinzufügung eines vorbestimmten Sicherheitsabstandswertes, einen Frequenzwert entsprechend der Abtastfrequenz mit einem Frequenzwert entsprechend dem Zweifachen der aktuell erfassten Frequenz des analogen Signalverlaufs vergleicht, mit den Schritten:
Erhöhen der veränderbaren Abtastfrequenz, wenn erfasst wird, dass die aktuelle Frequenz erhöht ist, und
Verringern der veränderbaren Abtastfrequenz, wenn erfasst wird, dass die aktuelle Frequenz verringert ist.

12. Verfahren nach Anspruch 11, bei welchem der Sicherheitsabstandswert in einem Bereich zwischen 5 und 25% eingestellt wird.

13. Verfahren nach einem der Ansprüche 8 bis 12, bei welchem die Inkrementalmarkierungen als einzelne Permanentmagnete (16) ausgebildet werden, deren jeweiliger magnetischer Feldstärkenverlauf durch die Abtastvorrichtung abgetastet wird.

14. Verfahren nach einem der Ansprüche 8 bis 13, bei welchem die Inkrementalmarkierungen als optische Markierungen ausgebildet werden, welche durch die Abtastvorrichtung optisch abgetastet werden.

## Claims

1. A linear position measuring system (10) for determining a position of a carriage in relation to a slide rail (12), with an incremental scale (14) placed along the slide rail (12) and a scanner secured to the carriage, wherein the scanner is designed to scan a plurality of incremental markings along the incremental scale (14), wherein the incremental markings can be scanned as an essentially analog signal progression, wherein the scanner is designed to scan the incremental markings with a variable scanning frequency which can be adaptively varied in relation to a currently acquired frequency of the analog signal progression, wherein the variable scanning frequency measures at least twice the currently acquired frequency of the analog signal progression, **characterized in that** the scanner is designed to determine the current frequency of the analog signal progression by scanning with a second scanning frequency that is higher than the variable scanning frequency.

2. Linear position measuring system (10) according to claim 1, in which the scanner is designed to carry out the second scanning routine after the receptive scanning with the variable scanning frequency has concluded.

3. Linear position measuring system (10) according to one of the preceding claims, in which the variable scanning frequency can be linearly or incrementally varied.

4. Linear position measuring system (10) according to one of the preceding claims, in which the scanner contains a comparator, which compares a frequency value equal to the scanning frequency with a frequency value corresponding to twice the currently acquired frequency of the analog signal progression, and the scanner is designed in such a way, subject to an added predetermined safety clearance value, as to:
increase the variable scanning frequency if the comparator has found an increase in the current frequency, and
decrease the variable scanning frequency if the comparator has found a decrease in the current frequency.

5. Linear position measuring system (10) according to claim 4, in which the safety clearance value measures a value ranging from 5 to 25%.

6. Linear position measuring system (10) according to one of the preceding claims, in which the incremental markings are designed as individual permanent magnets (16), whose respective magnetic field strength progression can be scanned by the scanner.

7. Linear position measuring system according to one of claims 1 to 5, in which the incremental markings are designed as optical markings, which can be optically scanned by the scanner.

8. A method for determining a position of a carriage in relation to a slide rail (12), with an incremental scale (14) placed along the slide rail (12) and a scanner secured to the carriage, wherein the scanner scans a plurality of incremental markings along the incremental scale (14), wherein the incremental markings are scanned as an essentially analog signal progression, wherein the incremental markings are scanned with a variable scanning frequency, which can be adaptively varied in relation to a currently acquired frequency of the analog signal progression, wherein the variable scanning frequency is set in such a way as to measure at least twice the currently acquired frequency of the analog signal progression, **characterized in that**
the current frequency of the analog signal progression is determined by scanning with a second scanning frequency that is higher than the variable scanning frequency.

9. Method according to claim 8, in which the second scanning routine is carried out after the respective scanning with the variable scanning frequency has concluded.

10. Method according to one of claims 8 to 9, in which the variable scanning frequency is linearly or incrementally varied.

11. Method according to one of claims 8 to 10, in which the scanner contains a comparator, which, subject to an added predetermined safety clearance value, compares a frequency value equal to the scanning frequency with a frequency value corresponding to twice the currently acquired frequency of the analog signal progression, in the following steps:
increase the variable scanning frequency if it is found that the current frequency has increased, and decrease the variable scanning frequency if it is found that the current frequency has decreased.

12. Method according to claim 11, in which the safety clearance value is set to a range of between 5 and 25%

13. Method according to one of claims 8 to 12, in which the incremental markings are designed as individual permanent magnets (16), whose respective magnetic field strength progression is scanned by the scanner.

14. Method according to one of claims 8 to 13, in which the incremental markings are designed as optical markings, which are optically scanned by the scanner.

## Revendications

1. Système d'odométrie (10) linéaire, destiné à déterminer une position d'un coulisseau en relation avec une glissière (12), avec une graduation d'incrémentation (14) appliquée le long de la glissière (12) et avec un dispositif de balayage monté sur le coulisseau, le dispositif de balayage étant conçu pour balayer une pluralité de marquages d'incrémentation le long de la graduation d'incrémentation (14), les marquages d'incrémentation étant susceptibles d'être balayés comme une onde de signal sensiblement analogique, le dispositif de balayage étant conçu pour balayer les marquages d'incrémentation avec une fréquence de balayage variable, laquelle est variable de manière adaptative en relation avec une fréquence actuellement détectée de l'onde de signal analogique, la fréquence de balayage variable étant d'au moins le double de la fréquence actuellement détectée de l'onde de signal analogique, **caractérisé en ce que** le dispositif de balayage est conçu pour déterminer la fréquence actuelle de l'onde de signal analogique par balayage à une deuxième fréquence de balayage, laquelle est supérieure à la fréquence de balayage variable.

2. Système d'odométrie (10) linéaire selon la revendication 1, sur lequel le dispositif de balayage est conçu pour procéder au deuxième balayage chaque fois après achèvement du balayage avec la fréquence de balayage variable.

3. Système d'odométrie (10) linéaire selon l'une quelconque des revendications précédentes, sur lequel la fréquence de balayage variable est variable de manière linéaire ou progressive.

4. Système d'odométrie (10) linéaire selon l'une quelconque des revendications précédentes, sur lequel le dispositif de balayage contient un comparateur, lequel compare une valeur de fréquence correspondant à la fréquence de balayage avec une valeur de fréquence correspondant au double de la fréquence actuelle détectée de l'onde de signal analogique et sous ajout d'une valeur d'intervalle de sécurité prédéfinie, le dispositif de balayage étant conçu pour :
augmenter la fréquence de balayage variable dans le cas d'une augmentation de la fréquence actuelle détectée par le comparateur et
réduire la fréquence de balayage variable dans le cas d'une réduction de la fréquence actuelle détectée par le comparateur.

5. Système d'odométrie (10) linéaire selon la revendication 4, sur lequel la valeur d'intervalle de sécurité est égale à une valeur de l'ordre de 5 à 25 %.

6. Système d'odométrie (10) linéaire selon l'une quelconque des revendications précédentes, sur lequel les marquages d'incrémentation sont conçus sous la forme d'aimants permanents (16) individuels, dont la courbe respective d'intensité de champ magnétique est susceptible d'être balayée par le dispositif de balayage.

7. Système d'odométrie (10) linéaire selon l'une quelconque des revendications 1 à 5, sur lequel les marquages d'incrémentation sont conçus sous la forme de marquages optiques qui sont susceptibles d'être balayés optiquement par le dispositif de balayage.

8. Procédé destiné à déterminer une position d'un coulisseau en relation avec une glissière (12), avec une graduation d'incrémentation (14) appliquée le long de la glissière (12) et un dispositif de balayage monté sur le coulisseau, le dispositif de balayage balayant une pluralité de marquages d'incrémentation le long de la graduation d'incrémentation (14), les marquages d'incrémentation étant balayés en tant qu'une onde de signal sensiblement analogique, les marquages d'incrémentation étant balayés à une fréquence de balayage variable, laquelle est variable de manière adaptative, en relation avec une fréquence actuellement détectée de l'onde de signal analogique, la fréquence de balayage variable étant réglée de sorte à correspondre au moins au double de la fréquence actuellement détectée de l'onde de signal analogique, **caractérisé en ce que**
la fréquence actuelle de l'onde de signal analogique est déterminée par balayage à une deuxième fréquence de balayage, laquelle est supérieure à la fréquence de balayage variable.

9. Procédé selon la revendication 8, lors duquel il est procédé au deuxième balayage chaque fois après l'achèvement du balayage à la fréquence balayage variable.

10. Procédé selon l'une quelconque des revendications 8 et 9, lors duquel la fréquence de balayage variable est modifiée de manière linéaire ou progressive.

11. Procédé selon l'une quelconque des revendications 8 à 10, lors duquel le dispositif de balayage contient un comparateur lequel, sous ajout d'une valeur d'intervalle de sécurité prédéfinie compare une valeur de fréquence correspondant à la fréquence de balayage avec une valeur de fréquence correspondant au double de la fréquence actuellement détectée de l'onde de signal analogique, avec les étapes :
augmentation de la fréquence de balayage variable, s'il est détecté que la fréquence actuelle est élevée et
réduction de la fréquence de balayage variable, s'il est détecté que la fréquence actuelle est réduite.

12. Procédé selon la revendication 11, lors duquel la valeur d'intervalle de sécurité est réglée dans un ordre de 5 à 25 %.

13. Procédé selon l'une quelconque des revendications 8 à 12, lors duquel les marquages d'incrémentation sont conçus en tant qu'aimants permanents individuels, dont la courbe respective d'intensité de champ magnétique est balayée par le dispositif de balayage.

14. Procédé selon l'une quelconque des revendications 8 à 13, lors duquel les marquages d'incrémentation sont conçus en tant que marquages optiques, lesquels sont optiquement balayés par le dispositif de balayage.
